**Europäisches Patentamt**

(19) **European Patent Office**

**Office européen des brevets**

(11) Publication number: **0 115 431**
**B1**

(12) **EUROPEAN PATENT SPECIFICATION**

(45) Date of publication of patent specification: **08.07.87**

(21) Application number: **84300487.0**

(22) Date of filing: **26.01.84**

(51) Int. Cl.⁴: **B 29 C 35/02**

(54) **Mold clamping mechanism for a tire curing press.**

(30) Priority: **27.01.83 JP 12334/83**

(43) Date of publication of application:
**08.08.84 Bulletin 84/32**

(45) Publication of the grant of the patent:
**08.07.87 Bulletin 87/28**

(84) Designated Contracting States:
**DE FR GB NL**

(56) References cited:
**US-A-3 669 581**
**US-A-3 686 391**
**US-A-3 734 656**
**US-A-3 827 839**
**US-A-3 830 605**

(73) Proprietor: **KABUSHIKI KAISHA KOBE SEIKO
SHO**
**3-18 1-chome, Wakinohama-cho Chuo-ku**
**Kobe 651 (JP)**

(72) Inventor: **Yokoyama, Kageki**
**6-22, Shinryodai 8-chome Tarumi-ku**
**Kobe (JP)**
Inventor: **Amano, Itaru**
**201-18, Tomogaoka 8-chome Suma-ku**
**Kobe (JP)**

(74) Representative: **Wright, Hugh Ronald et al**
**Brookes & Martin 52/54 High Holborn**
**London WC1V 6SE (GB)**

Courier Press, Leamington Spa, England.

## Description

This invention relates to a mould clamp mechanism useful on a tyre curing press for clamping upper and lower moulds during tyre vulcanising operation, and preferably to a mould clamp mechanism of a stable and sturdy construction which can maintain a high degree of concentricity and parallelism of upper and lower moulds in a simple manner.

As is well known in the art, for vulcanising to shape a green tyre which has been placed in upper and lower moulds of a tyre curing press, it is necessary to clamp the upper and lower moulds together in a closed state against a high internal pressure which develops within the moulds. In this regard, there have been used various conventional or improved mould clamp means. In a typical conventional mould clamp mechanism, opening, closing and clamping of an upper mould relative to a lower mould is produced by upward or downward movement of a main beam on which the upper mould is mounted, the main beam being lifted up and down by a side link which is operated by a crank gear, a cam groove or the like and mounted on side plates provided on opposite sides of the tyre vulcanising press. Conventional tyre clamp mechanisms are generally disadvantageously large in size and complicated in construction, provide an inferior press efficiency and allow the possibility of imperfect alignment of the closed upper and lower moulds due to flexure of the main beam. Above all, it has been difficult for conventional mould clamping mechanisms to comply with the requirement that the concentricity and parallelism of the upper and lower moulds should be strictly maintained at the time of mould closure and clamping in a tyre curing operation.

In place of the above mentioned conventional mould clamp mechanism, there have been employed improved mould clamp mechanisms which are provided with a mould pressing means separately from a mould lift means which serves to open and close upper and lower moulds, and in which the moulds are opened and closed by vertically moving an upper mould up and down relative to a lower mould on a press base, and clamping the upper and lower moulds directly by a pressing means which is provided in the vicinity of the moulds to generate a mould clamping force. Although there are various types of improved mould clamp mechanisms, it would be appropriate here to take a recent example which is provided with: a press base having a lower mould cavity fixed thereon; a lower mould assembly received in the lower mould cavity and including a platen support, a heat insulator, a platen, and a mould, the lower mould assembly being vertically movably supported by a hydraulic cylinder which is mounted on a lower portion of the press base; and an upper mould cavity supported on a vertically movable beam and incorporating therein an upper mould assembly opposite to the lower mould assembly. After closing and locking the upper mould cavity on the lower mould cavity, the lower mould assembly is lifted up and clamped against the upper mould assembly by the hydraulic cylinder.

The above described type of the improved mould clamp mechanism has certain advantages such as relatively short stroke length of the hydraulic cylinder, simplification to some extent of the upper mould support structure which is free of the reaction of the mould clamping force, and simplification and reduction in size and cost of the curing machine as a whole. However, on the contrary, a mould clamp mechanism of the type which has a lower mould assembly vertically movably mounted on a press base has a serious problem with regard to the concentricity and parallelism of upper and lower mould assemblies which are the most important factors to be considered in the tyre curing operation, and fails to attain the high degree of alignment of the upper and lower moulds which is essential if one is to improve the quality of the final products. Besides, with regard to the much valued simplifying of the construction and maintenance, it becomes necessary to provide a heat source which is movable with the movable lower mould, by using a rotary joint, a flexible tube or the like, as a movable support structure for a steam pipe thus further complicating the construction, and damaging the component parts by repeated reciprocal movements and requiring the strengthening of seal construction.

According to the present invention, there is provided a mould clamping mechanism for a tyre curing press, including a press base, a lower mould cavity provided on said press base, a lower mould assembly received within said lower mould cavity, an upper mould cavity, an upper mould assembly received within said upper mould cavity, said upper mould cavity and said upper mould assembly being mounted in opposed relation to said lower mould cavity and said lower mould assembly and being vertically movable toward and away therefrom, lock means for releasably locking said upper and lower mould cavities and means to generate a mould clamping force, characterised in that said lower mould assembly is fixed to the press base, means are provided for resiliently supporting the lower mold cavity on the press base, said clamping force generating means acts between said lower mould cavity and said lower mould assembly so as to force the lower mould cavity downwardly.

The above and other features and advantages of the present invention will become apparent from the following description and appended claims, taken in conjunction with the accompanying drawings which show by way of example an illustrative embodiment of the invention. In the accompanying drawings:

Figure 1 is a partly sectioned front view of a dual mould type tyre curing press to which the present invention is applicable;

Figure 2 is a side view of the tyre curing press shown in Figure 1;

Figure 3 is a plan view of the same tyre curing press;

Figure 4 is a partly sectioned front view of a mould clamp apparatus embodying the present invention;

Figure 5 is a sectional view taken on line V—V of Figure 4;

Figure 6 is a sectional view taken on line VI—VI of Figure 1;

Figure 7 is a fragmentary plan view of a lock mechanism; and

Figure 8 is a cross-sectional view taken on line VIII—VIII of Figure 6.

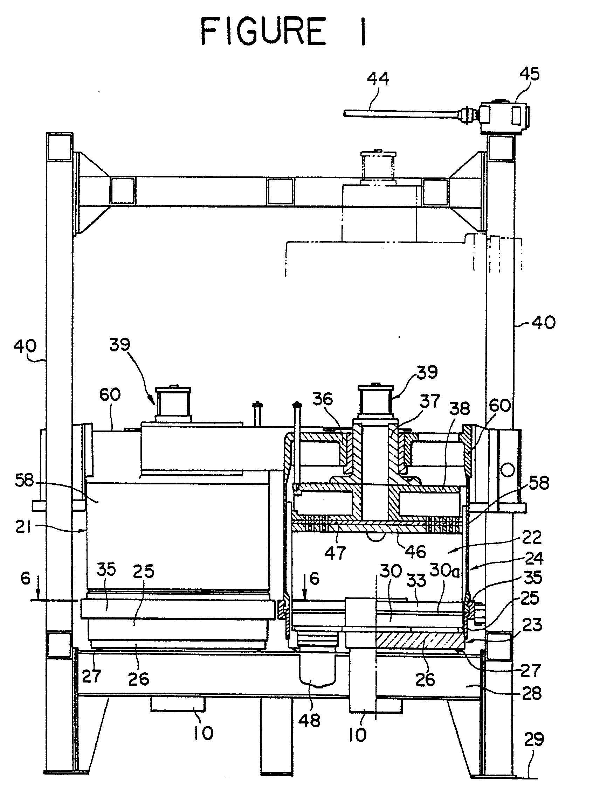

Referring to Figures 1 to 3, there is shown the general construction of a tyre curing press to which the present invention is applicable, the tyre curing press having two sets of moulds 21 and 22 juxtaposed on a press base 28 which is fixed on an installation floor 29. Although a dual mould type tyre curing press is shown in this particular embodiment, it is to be understood that the invention is applicable to tyre curing presses which are provided with three or more sets of moulds. As shown particularly in Figure 1, the moulds 21 and 22 are each provided with a lower mould cavity 23 which is resiliently supported on a press base 28, and an upper mould cavity 24 which is vertically movable toward and away from the lower mould cavity 23 and releasably closable on the latter. The lower mould cavity 23 includes a horizontal plate 26 which is disposed parallel with the upper surface of the press base 28 and an upright cylindrical wall 25 formed around the outer periphery of the horizontal plate 26 which is resiliently supported on the press base 28 through leaf springs 27 or the like. Likewise, the upper mould cavity 24 is constituted by a cylindrical wall 58 and a caplike top wall 60, and vertically movably supported on side frames 40 which are disposed on opposite sides of the press base 2, through a lift means which will be described later.

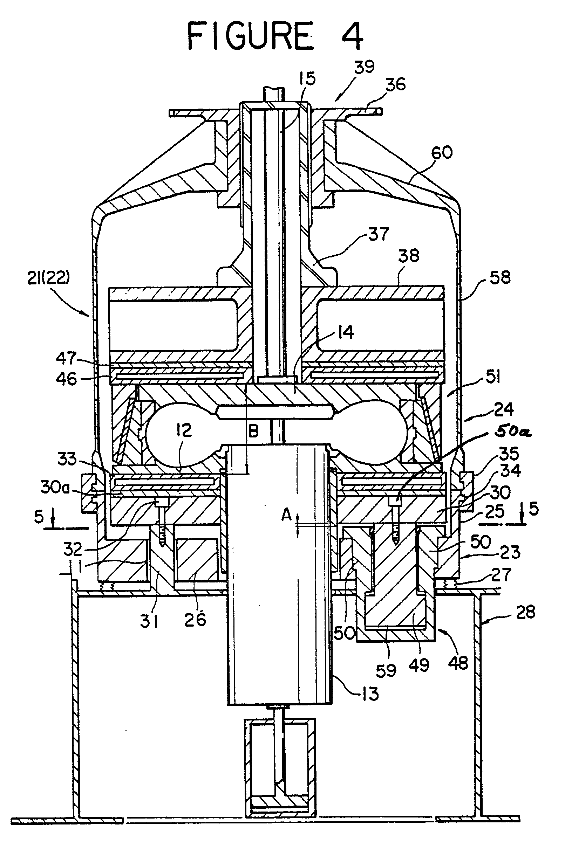

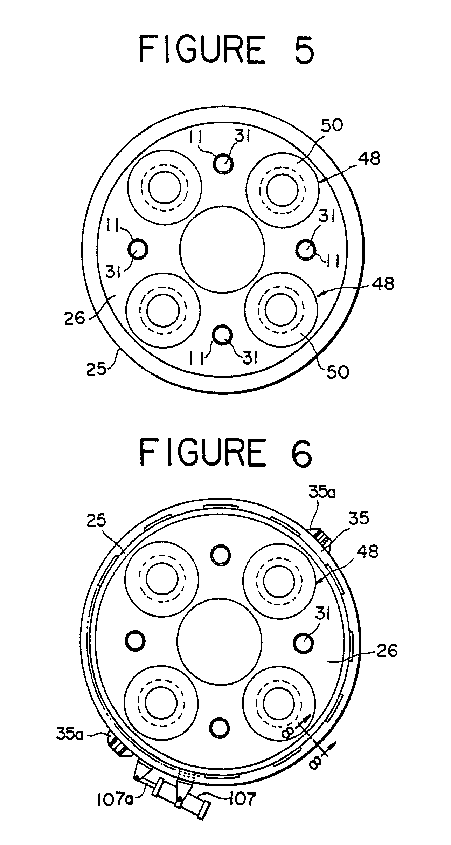

Reference is now made to Figure 4 for particulars of the constructions of upper and lower mould assemblies adapted to receive split moulds in the upper and lower mould cavities 24 and 25. The horizontal plate 26 of the lower mould cavity 23, which is resiliently supported on the press base 28 through leaf springs 27 or the like, is provided with a number of apertures 11 (four in the particular embodiment shown) at equidistant positions around the centre of the plate (or press centre) as shown particularly in Figure 5 which is a section taken on line V—V of Figure 4. Slidably received in the apertures 11 through bushings or the like are the same number of connecting rods 31 which are fixedly provided on the press base 28 in alignment with the respective apertures 11. A lower platen support 30 is securely fixed to the lower ends of the connecting rods 31 by mounting bolts 32. In a manner well known in the art, a lower platen 33 is mounted on top of the lower platen support 30 in an overlapping fashion through a heat insulating material 30a, and a lower mould 12 is mounted on the lower platen 33. Thus, the lower mould assembly including the lower platen support 30, heat insulating material 30a, lower platen 33 and lower mould 12 is fixed to the press base 28 through the linkage of the support 30 and connecting support rods 31. Provided at the centre position on the press base 28 is a centre mechanism 13 including, as well known in the art, a bladder which is contractably expansible into contact with the inner surface of a green tyre and means for feeding a hot pressure medium into the bladder as a heat source for the vulcanizing step. The centre mechanism 13 is movable up and down through the press base 28, lower mould cavity 23 and lower mould assembly, and is designed to eject a vulcanized tyre from the lower mould by the bladder in the same manner as in the conventional tyre curing machine. The construction of the bladder itself and the mechanism for contractably expanding the bladder are omitted from the description and drawings since they may be of conventional types.

A centre mechanism 39 is mounted likewise centrally on the top wall 60 which extends from the cylindrical wall 58 of the upper mould cavity 24, occupying the centre of the press in a face to face relation with the afore-mentioned centre mechanism 13 in the lower mould cavity 23. As shown in Figure 4, the centre mechanism 39 is provided with a mould height adjusting mechanism including an adjusting nut 36 which is rotatably fitted in a neck portion of the top wall 60 of the cylindrical wall 58 and in threaded engagement with an adjusting screw cylinder 37 so that the cylinder 37 can be lifted up and down upon rotating the adjusting nut 36 in forward and reverse directions, respectively. The upper platen support 38 is securely fixed to the lower end of the screw cylinder 37, and the upper platen 46 is fixed to the lower side of the platen support 38 through a heat insulating material 47, mounting the upper mould 14 on the upper platen 46. The upper mould 14 is connected to a piston rod 15 which extends through the centre of the centre mechanism 39. Although not shown in the drawing, the piston rod 15 is part of a hydraulic piston-cylinder which is mounted on the centre mechanism 39. The upper mould assembly is arranged in the above-described manner, so that a split mould 51 for vulcanizing a green tyre is provided by the upper and lower moulds 12 and 14. The upper and lower platens 46 and 33 are supplied with steam or other heating medium as a vulcanizing heat source in the manner well known in the art.

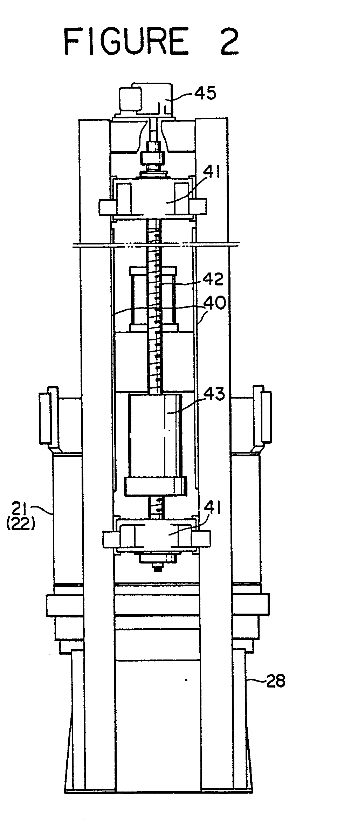

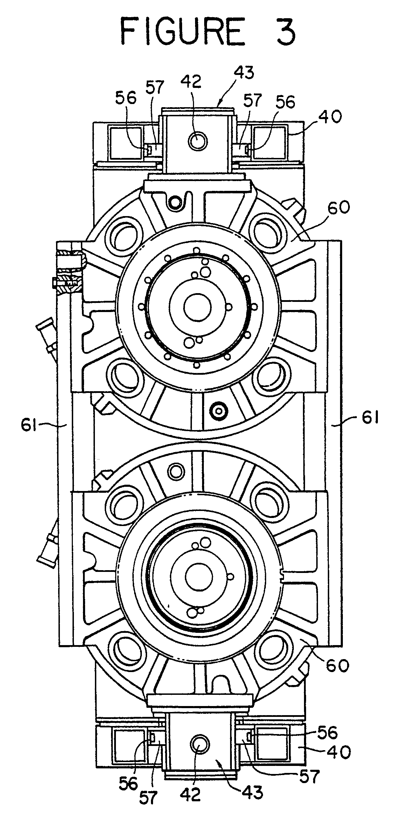

In the particular embodiment shown, the mould is opened and closed by vertically moving the upper mould cavity 24 together with the upper mould assembly relative to the lower mould cavity 23 through the mechanism as shown in Figure 1 to 3. Thus, in order to open and close simultaneously two upper mould cavities 24 relative to two corresponding lower mould cavities 23, the top walls 60 of the juxtaposed upper mould cavities 24 are integrally connected with each other by means of link members 61 as shown in Figure 3, and a couple of screw shafts 42 are mounted on the side frames 40 on the opposite sides of the press base 28 through the bearing boxes 41 for rotation in forward and reverse directions. As shown in Figure 2, the screw shafts 42 are threadedly engaged with ball screw nuts in lift supports 43 which are fixedly mounted at one side of the upper mould cavities 24, so that the lift supports 43 can be vertically moved up and down upon rotating the screw shafts 42 in forward and reverse directions thereby to open and close the upper mould cavities 24 relative to the lower mould cavities 23. In this instance, the aforementioned lift supports 43 are each provided with slide guides 57 as shown particularly in Figure 3 for engagement with guide rails 56 which are provided on the part of the side frames 40. The screw shafts 42 are rotated by means of a rotational shaft 44 which is mounted on the side frames 40 and arranged to transmit rotation of a motor (not shown) to the screw shafts 42 through for example, a reducer 45 in Figures 1 and 2 to rotate the two screw shafts 42 in synchronism with each other.

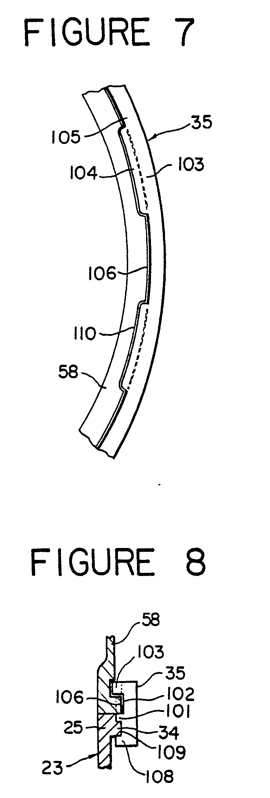

As illustrated in Figures 1 and 4, the mould clamp apparatus of the invention further includes a mechanical lock means which comprises a lock ring 35 in the particular embodiment shown, thereby to lock or unlock the closed upper and lower mould cavities 24 and 23 together. The construction of the lock ring 35 is shown in Figures 4 and 6 (a sectional view taken on line VI—VI of Figure 1) to 8. More specifically, the lock ring 35 is provided with an annular groove 109 on the inner periphery thereof between an inwardly projecting locking rim 108 formed around its lower inner edge and a similarly inwardly projecting locking rim 101 formed around its inner periphery above the rim 108. The annular groove 109 of the lock ring 35 is rotatably fitted on a flanged wall 34 which projects radially outward from the outer periphery of the cylindrical wall 25 of the lower mould cavity 23 at a level close to its upper end to support the lock ring 35 thereon. Similarly, an annular locking groove 102 is formed on the inner periphery of the lock ring 35 between the locking rim 101 and an upper rim 103 which is provided by alternate inwardly projecting tooth portions 104 and indented or blank portions 105 on the inner periphery thereof as shown particularly in Figure 7. On the other hand, formed around the outer periphery of the lower end of the cylindrical wall 58 of the upper mould cavity 24 are indented or blank portions 110 which may pass through the tooth portions 104 on the lock ring 35 and alternate outwardly projecting tooth portions 106 which may pass through the indented blank portions 105 and are engageable with the tooth portions 104 of the ring 35. The lock ring 35 may be rotated in forward and reverse directions into locking and unlocking positions by a rotary member such as a rotary cylinder 107 which is mounted on the cylindrical wall 25 of the lower mould cavity 23 with its actuator rod 107a connected to the lock ring 35 as shown in Figure 6. Therefore, when the lock ring 35 is in an open position, the tooth portions 104 on the ring 35 are opposite the indented blank portions 110 on the cylindrical wall 58 as the upper mould cavity 24 is lowered, and the indented blank portions 105 on the ring 35 are opposite the tooth portions 106 on the cylindrical wall 58 of the upper mould cavity 24, as shown in Figure 7. Accordingly, the lower end of the cylindrical wall 58 may pass through the tooth portions 103 of the ring 35 and engage with the locking groove 102 as shown in Figure 8. In this state, the upper and lower mould cavities are locked to each other upon turning the lock ring 35 by the actuator rod 107a of the rotary member 107 in such a manner as to shift the tooth portions 104 of the ring 35 into vertically overlapping positions relative to the tooth portions 106 on the cylindrical wall 58. It is, however, possible to use a lock means other than the lock ring 35 which is exemplified in the drawings. In the particular embodiment shown, a split type lock ring 35 is employed to facilitate its mounting and the split joints 35a of the ring 35 are shown in Figure 6.

Thus, the upper and lower mould assemblies in the upper and lower mould cavities 24 and 25 which are locked in closed position in the above-described manner are clamped by the clamp means shown in Figures 1, 4 and 5.

In uniformly distributed positions around the press centre, cylinders 50 of a suitable number of hydraulic cylinder assemblies (four in the particular embodiment shown) are mounted on the horizontal plate 26 of the lower mould cavity 23 which is resiliently supported on the press base 28 through leaf springs 27 or the like, and piston rods 49 of the cylinder assemblies 48 are fixedly secured to the lower platen support 30 of the lower mould assembly by mounting bolts 50a. In Figure 4, the reference numberal 51 denotes the split mould assembly including upper and lower moulds 12 and 14.

The mould clamp mechanism according to the invention is operated in the following manner. In order to open the upper mould cavity 24 and upper mould after completion of one cycle of the tyre curing operation, the mould lock is released by turning the lock ring 35 in a releasing direction, shifting the tooth portions 104 of the ring 35 away from the tooth portions 106 into positions which are vertically aligned with the indented blank portions 110 of the wall 58. Thereafter, the screw shafts 42 on the side frames 40 are rotated in an opening direction to elevate the lift support 43, retracting the mould cavity 24 and upper mould 14 into an upper fully open position. In this fully-open state, the cured tyre is ejected by operation of the centre mechanism in the conventional manner, namely, by lifting up the tyre from the lower mould 12, removing the bladder and discharging the tyre out of the machine by an unloader. Thereafter, in a next phase of operation, a new green tyre is delivered and set in position by operation of a loader, and the centre mechanism 39 is lowered to fit the bladder in the green tyre for contact with the inner surface thereof and preshape the tyre by feeding a hot pressure medium like steam into the bladder. Simultaneously, the upper mould cavity 24 is lowered and closed on the lower mould cavity 23 to join the upper and lower moulds 12 and 14 together. In a case where the upper mould 14 is an assembled type consisting of a top mould and a side mould as shown in Figure 4, the mould assembly is pushed down by the piston rod 15 and retained in that state until the upper platen 46 comes into contact with the upper surface of the upper mould as a result of lowering of the upper mould cavity 24 by the screw rods 42. After this, the whole mould assembly is lowered integrally, together with the loaded green tyre. Immediately before complete closure of the moulds, the force F2 which is downwardly applied by the screw rods 42 which tend to lower the upper mould cavity and lower mould 14 should be greater than the downward force F1 of the piston rod 15 which acts to close the split mould. Upon complete closure, the lowering of the upper mould cavity 24 is stopped. At this time, the tooth portions 106 at the lower end of the cylindrical wall 58 of the upper mould cavity 24 are positioned in vertical alignment with the indented blank portions 105 of the lock ring 35 so that the lower end of the wall 58 may drop and fit in the locking groove 102 of the lock ring 35 as shown in Figure 8. The stopped upper mould cavity 24 is then locked to the lower mould cavity 23 by engagement of the tooth portions 104 and 106 upon turning the lock ring 35 in a locking direction. In the next phase of operation, a high fluid pressure (hydraulic pressure) is supplied to the cylinders 50 of the hydraulic cylinder assemblies 48, into head end spaces 59 which are provided beneath the piston rods 49 as shown in Figure 4, whereupon the cylinders 50 are moved downwardly against the action of the springs 27. As a result, the lower mould cavity 23 is also moved downward integrally with the cylinders 50, and the upper mould cavity 24 which is locked to the lower mould cavity 23 through the lock ring 35 is pulled down to apply a clamping force on the mould assembly 51. In this clamped state, the tyre is cured to shape by the heating by the upper and lower platens 33 and 46 and application of internal pressure. Should the fluid pressure in the cylinder assemblies 48 be drained for some reason during a vulcanizing operation, the clearance A which exists between the upper surface of the cylinders 50 and the underside of the lower platen support 30 as indicated in Figure 4 would become zero. This is because the cylinders 50 are pulled upward by the pressure of steam or other tyre vulcanizing medium. The height of the mould which is indicated at B in Figure 4 can be easily adjusted by turning the adjusting nut 36 which is in engagement with the screw cylinder 37 on the upper mould cavity 24.

One of the greatest advantages of the mould clamp mechanism described resides in that the lower platen 33 which determines the position of the lower mould 12 is securely fixed to the press base 28 and the lower mould cavity 23 is resiliently and downwardly movably supported by the fluid cylinder assemblies 48 interposed between the lower platen 33 and mould cavity 23 to apply a strong mould clamp pressure through the lower mould without impairing the concentricity and parallelism of the upper and lower moulds. In closing and clamping upper and lower moulds of a split mould assembly 51 in this sort of tyre curing machine, the conventional method in which a pressure is applied from above through a beam or from a lateral side often suffers from troubles such as flexure and bending deformation or misalignment of the split moulds under the clamping pressure. In order to preclude these troubles and to have uniform pressurization, it is advantageous to employ a direct clamping method pushing up the split moulds from beneath. However, if one attempts to effect the direct clamping by mounting the lower platen so as to be vertically movable on the press base and directly connecting the piston rods of the hydraulic cylinders to the lower side of the platen, it becomes difficult to maintain the concentricity and parallelism, which are prerequisite to the alignment of the upper mould with the lower mould, throughout the repeated upward and downward movements of the upper mould in a high temperature environment. In such a case, the upper mould will easily lose stability, suffering from shifts in positions, misalignment and inclinations even in a relatively short time period of use. Besides, the construction becomes extremely complicated because it is necessary to provide facilities for feeding a vulcanizing heating medium on the side of the platen, including pipe fittings which are movable with the platen. It is obviously disadvantageous to mount such pipe fittings on a movable part in view of the high strength and perfect seals which would be required.

According to the present invention, the lower platen 33 is always fixed on the press base 28 in a stable and secure manner, while mounting the lower mould cavity 23 on a resilient support. This mould cavity pull-down method is extremely advantageous as direct pressurization from the lower mould. By so doing, the upper and lower moulds are brought into accurate alignment with each other, and concentricity and parallelism of the moulds are maintained with high accuracy, improving the degree of precision of vulcanization to a considerable degree by precluding flexure, deformation and positional deviations or misalignment of the moulds. Since the free lower mould is urged upwardly to allow for the lowering of the upper mould, by resiliently supporting the lower mould cavity 23 on the press base 28 through leaf springs 27 or the like, the stroke length of the hydraulic cylinder assemblies 48 which are provided between the lower platen 33 and mould cavity 23 may be very short, e.g., in the range of about 5 to 10 mm. Therefore, the hydraulic cylinder assemblies can be designed to be compact in construction so as not to protrude over a great length beneath the press base. Thus, an ample space can be left under the press base 28 to facilitate the mounting or installation of necessary pipe fittings. Further, there is no necessity to provide special cooling equipment for the cylinder assemblies 48, which facilitates the installation and maintenance of pipes to the lower platen 33. As is clear from the particular example shown, the mould clamp mechanism of the present invention is relatively simple in constructions and excellent in performance.

There has thus been described a mould clamp apparatus of the type which is provided with a mould pressing means separately from a mould clamp mechanism serving for opening and closing moulds in upper and lower mould cavities on a tyre curing machine.

The described apparatus can ensure a high degree of alignment in a mould closing operation without impairing the concentricity and parallelism of the moulds and at the same time can clamp the closed moulds by directly pressing the lower mould.

The mould clamp apparatus is simple and compact in construction and simple to maintain.

## Claims

1. A mould clamping mechanism for a tyre curing press, including a press base (28), a lower mould cavity (23) provided on said press base (28), a lower mould assembly received within said lower mould cavity (23), an upper mould cavity (24), an upper mould assembly received within said upper mould cavity (24), said upper mould cavity (24) and said upper mould assembly being mounted in opposed relation to said lower mould cavity (23) and said lower mould assembly and being vertically movable toward and away therefrom, lock means (35) for releasably locking said upper and lower mould cavities (23, 24) and means (48) to generate a mould clamping force, characterised in that said lower mould assembly is fixed to the press base (28), means are provided for resiliently supporting the lower mould cavity (23) on the press base (28), said clamping force generating means (48) acts between said lower mould cavity (23) and said lower mould assembly so as to force the lower mould cavity (23) downwardly.

2. A mould clamp apparatus as claimed in claim 1, characterised in that said lower mould cavity (23) comprises a horizontal plate (26) disposed parallel with said press base (28) and an upright cylindrical wall (25) extending upwardly from the outer periphery of said horizontal plate (26), and spring means (27) is provided for resiliently supporting said lower mould cavity (23) on said press base (28).

3. A mould clamp apparatus as claimed in claim 2, characterised in that said horizontal plate (26) of said lower mould cavity (23) is provided with a plurality of apertures (11) for slidably receiving a corresponding number of connecting rods (31) securely connecting a lower platen support (30) of said lower mould assembly to said press base (28).

4. A mould clamp apparatus as claimed in any of claims 1 to 3, characterised in that said mould clamping force generating means (48) comprises a plurality of fluid hydraulic cylinders (50) fixedly mounted on said horizontal plate (26) at uniformly distributed positions around the press centre and having respective piston rods (49) bearing on the underside of said lower platen support (30).

5. A mould clamp apparatus as claimed in claim 1, characterised in that said lock means (35) comprises a lock ring (35) rotatably fitted on one mould cavity (23) and releasably interlockable with the other mould cavity (24), and means (107) for turning said lock ring (35) into and out of a locking position relative to said other mould cavity (24).

## Patentansprüche

1. Formschließmechanismus für eine Reifenvulkanisierpresse mit einem Pressentisch (28), mit einer unteren, an dem Pressentisch (28) vorgesehenen Formhöhlung (23), mit einer innerhalb der unteren Formhöhlung (23) aufgenommenen unteren Formbaugruppe, mit einer oberen Formhöhlung (24), mit einer innerhalb der oberen Formhöhlung (24) aufgenommenen oberen Formbaugruppe, wobei die obere Formhöhlung (24) sowie die obere Formbaugruppe in zur unteren Formhöhlung (23) sowie zur unteren Formbaugruppe gegenüberstehender Beziehung montiert und vertikal zu diesen hin sowie von diesen weg bewegbar sind, mit die untere sowie obere Formhöhlung (23, 24) lösbar verriegelnden Verschlußeinrichtungen (35) und mit einer eine Formschließkraft erzeugenden Einrichtung (48), dadurch gekennzeichnet, daß die untere Formbaugruppe am Pressentisch (28) befestigt ist, daß die untere Formhöhlung (23) elastisch am Pressentisch (29) lagernde Einrichtungen vorhanden sind und daß die die Formschließkraft erzeugende Einrichtung (48) zwischen der unteren Formhöhlung (23) und der oberen Formbaugruppe wirksam ist, um die untere Formhöhlung (23) nach abwärts zu drücken.

2. Formschließmechanismus nach Anspruch 1, dadurch gekennzeichnet, daß die untere Formhöhlung (23) eine parallel zum Pressentisch (28) angeordnete horizontale Platte (26) sowie eine vom Außenumfang der horizontalen Platte (26) aufwärts sich erstreckende aufrechte Zylinderwand (25) umfaßt und daß Federungseinrichtungen (27) vorhanden sind, die die untere Formhöhlung (23) am Pressentisch (28) elastisch lagern.

3. Formschließmechanismus nach Anspruch 2, dadurch gekennzeichnet, daß die horizontale Platte (26) der unteren Formhöhlung (23) mit einer Mehrzahl von Öffnungen (11) zur verschiebbaren Aufnahme einer entsprechenden Anzahl von Verbindungsstagen (31), welche einen unteren Plattenträger (30) der unteren Formbaugruppe mit dem Pressentisch (28) fest verbinden, versehen ist.

4. Formschließmechanismus nach einem der Ansprüche 1 bis 3, dadurch gekennzeichnet, daß die die Formschließkraft erzeugende Einrichtung (48) eine Mehrzahl von Hydraulikzylindern (50) umfaßt, die an der horizontalen Platte (26) an gleichförmig rund um die Pressenmitte verteilten Stellen fest angebracht sind und jeweils an der Unterseite des unteren Plattenträgers (30) anliegende Kolbenstangen (49) haben.

5. Formschließmechanismus nach Anspruch 1, dadurch gekennzeichnet, daß die Verschlußeinrichtungen (35) einen drehbar an einer Formhöhlung (23) angebrachten Verschlußring (35), der lösbar mit der anderen Formhöhlung (24) zu verriegeln ist, und Einrichtungen zum Verschwenken des Verschlußrings (35) in die sowie aus der Verriegelungslage mit Bezug zur anderen Formhöhlung (24) umfassen.

## Revendications

1. Mécanisme de verrouillage pour des moules d'une presse de vulcanisation de pneumatiques, comprenant un pied de presse (28), une cavité inférieure de moule (23) montée sur ledit pied de presse (28), un ensemble de moule inférieur logé dans ladite cavité inférieure de moule (23), une cavité supérieure de moule (24), un ensemble de moule supérieur logé dans ladite cavité supérieure de moule (24), ladite cavité supérieure de moule (24) et ledit ensemble de moule supérieur étant montés en opposition par rapport à ladite cavité inférieure de moule (23) et audit ensemble de moule inférieure et étant mobiles verticalement en se rapprochant et s'éloignant de ceuxi-ci, un moyen de verrouillage (35) pour verrouiller avec possibilité de déverrouillage lesdites cavités supérieure et inférieure de moule (23, 24) et un moyen (48) pour produire une force de verrouillage du moule, caractérisé en ce que ledit ensemble de moule inférieur est fixé au pied de presse (28), en ce que des moyens sont prévus pour supporter élastiquement la cavité inférieure de moule (23) sur le pied de presse (28), ledit moyen engendrant une force de verrouillage (48) agissant entre ladite cavité inférieure de moule (23) et ledit ensemble de moule inférieur, de façon à contraindre la cavité inférieure de moule à se déplacer vers le bas.

2. Mécanisme de verrouillage pour moules selon la revendication 1, caractérisé en ce que ladite cavité inférieure de moule (23) comprend une plaque horizontale (26), disposée parallèlement audit pied de presse (28) et une paroi cylindrique verticale (25) s'étendant vers le haut à partir de la périphérie extérieure de ladite plaque horizontale (26) et qu'un moyen élastique (27) est prévu pour supporter élastiquement ladite cavité inférieure de moule (23) sur ledit pied de presse (28).

3. Mécanisme de verrouillage pour moules selon la revendication 2, caractérisé en ce que ladite plaque horizontale (26) de ladite cavité inférieure de moule (23) est pourvue d'une pluralité d'ouvertures (11) pour recevoir de façon coulissante un nombre correspondant de bielles (31) reliant solidement un support de platine inférieur (30) dudit ensemble de moule inférieur audit pied de presse (28).

4. Mécanisme de verrouillage pour moules selon l'une quelconque des revendications 1 à 3, caractérisé en ce que ledit moyen de producion d'une force de verrouillage des moules (48) comprend une pluralité de cylindres hydrauliques fluidiques (50) montés de façon fixe sur ladite plaque horizontale (26) en des positions uniformément distribuées autour du centre de la presse et munis de tiges de piston correspondantes (49) portant sur la face inférieure dudit support de platine inférieur (30).

5. Mécanisme de verrouillage pour moules selon la revendication 1, caractérisé en ce que ledit moyen de verrouillage (35) comprend une bague de blocage (35) montée rotative dans une cavité de moule (23) et interverrouillée de façon amovible avec l'autre cavité de moule (24) et un moyen (107) pour faire pivoter ladite bague de blocage (35) en position de verrouillage et de déverrouillage par rapport à ladite autre cavité de moule (24).

# FIGURE 1

# FIGURE 2

# FIGURE 3

# FIGURE 4

# FIGURE 5

# FIGURE 6

# FIGURE 7

# FIGURE 8